# EUROPÄISCHE PATENTSCHRIFT

(11) **EP 2 229 320 B1**
(45) Veröffentlichungstag und Bekanntmachung des Hinweises auf die Patenterteilung: **22.04.2015**
(21) Anmeldenummer: 09702070.5
(22) Anmeldetag: 12.01.2009
(51) Int. Cl.: B64D 11/06, B64D 13/06

(54) **INDIVIDUELLE TEMPERIERUNG VON LUFTFAHRZEUGKABINENBEREICHEN DURCH HEIZEN UND VERDUNSTUNGSKÜHLUNG**
INDIVIDUAL TEMPERATURE-CONTROL OF AIRCRAFT CABIN REGIONS BY HEATING AND EVAPORATIVE COOLING
THERMORÉGULATION INDIVIDUELLE DE ZONES DE CABINE D'AVION PAR CHAUFFAGE ET PAR REFROIDISSEMENT PAR ÉVAPORATION

(30) Priorität: 16.01.2008 DE 102008004695; 16.01.2008 US 21362
(43) Veröffentlichungstag der Anmeldung: 22.09.2010
(73) Patentinhaber: Airbus Operations GmbH, 21129 Hamburg (DE)
(72) Erfinder: DITTMAR, Jan, 21614 Buxtehude (DE); SCHUMACHER, Christian, 22880 Wedel (DE)
(74) Vertreter: Beyer, Andreas
(86) Internationale Anmeldenummer: PCT/EP2009/000120
(87) Internationale Veröffentlichungsnummer: WO 2009/090026

(56) Entgegenhaltungen:
- US-A- 2 979 916
- US-A- 4 373 347
- US-A- 5 699 983
- US-A- 6 003 327
- US-A1- 2002 096 312

## Beschreibung

Die Erfindung betrifft das individuelle Temperieren von Bereichen einer Kabine eines Luftfahrzeuges durch Verdunstungskühlung und Heizen.

Das Temperieren von Luftfahrzeugkabinen ist beispielsweise bekannt aus der US 2002/0096312, die den nächstliegenden Stand der Technik darstellt und den Oberbegriff des Anspruchs 1 offenbart.

Bei Luftfahrzeugen mit einer in mehrere Bereiche unterteilten Kabine besteht allgemein der Wunsch, jeden Bereich mit einer unterschiedlichen Temperatur klimatisieren zu können. Beispielsweise kann die Economy-Klasse eine andere Temperatur als die Business-Klasse aufweisen. In einer Suite der ersten Klasse kann die Temperatur individuell einstellbar sein. Die Temperatur in der Business-Klasse wird typischerweise zentral vorgegeben. Ein Passagier kann jedoch die Temperatur in der Umgebung seines Sitzes individuell einstellen, so dass die Umgebung des Sitzes mit kälterer oder wärmerer Luft als der übrige Business-Klasse-Bereich versorgt wird. Durch die individuelle Klimatisierung von Bereichen der Kabine können auch unterschiedliche Wärmelasten in den Bereichen berücksichtigt werden.

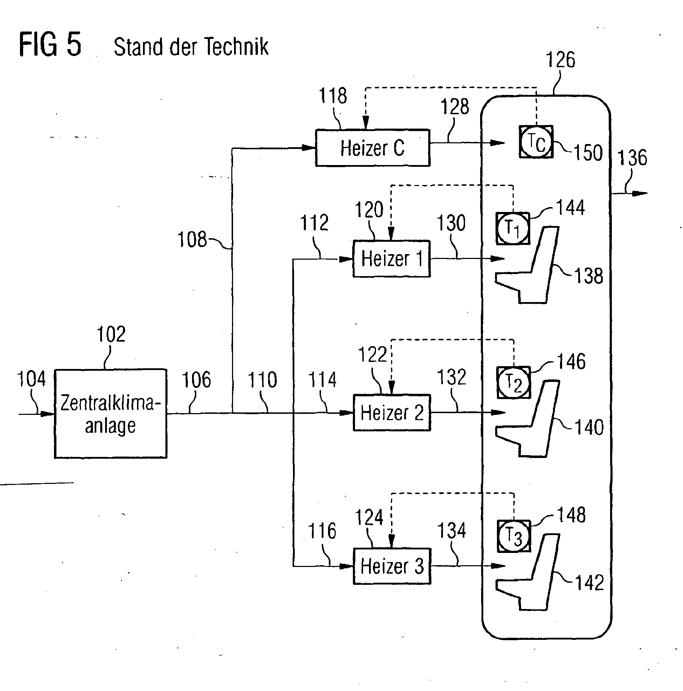

Figur 5 stellt ein herkömmliches System zum Klimatisieren von Teilbereichen eines Luftfahrzeuges dar. Eine Zentralklimaanlage 102 wird mit einem Luftstrom 104 versorgt, der unter einen Druck gesetzt ist, der höher als der Druck außerhalb der Kabine ist. Typischerweise beträgt der Druck etwa 700 bis 800 mbar, was etwa einer Höhe von 2000 m bis 3000 m über dem Meeresspiegel entspricht. Die der Zentralklimaanlage 102 zuzuführende Luft 104 kann beispielsweise aus einer Kabine rezirkulierte Luft 136 oder Triebwerkszapfluft sein. Die Zentralklimaanlage 102 gibt einen Luftstrom 106 mit einer vorbestimmten Temperatur ab. Der Luftstrom wird in eine Mehrzahl von Leitungen 108, 112, 114 und 116 aufgeteilt, wo er separaten Heizeinrichtungen 118, 120, 122 und 124 zugeführt wird. Von der Kabinen-Heizeinrichtung 118 wird der Luftstrom 128 einer Kabine 126 zugeführt. Von der ersten Heizeinrichtung 120 wird der Luftstrom 130 einer Umgebung eines ersten Sitzes 138 zugeführt. Der von einer zweiten Heizeinrichtung 122 abgegebene Luftstrom 132 und der von einer dritten Heizeinrichtung 124 abgegebene Luftstrom 134 werden jeweils einer Umgebung eines zweiten Sitzes 140 bzw. dritten Sitzes 142 zugeführt. In der Kabine ist ein Temperatursensor 150 vorgesehen und in der Umgebung der Sitze 138, 140 und 142 ist je ein Temperatursensor 144, 146 und 148 angeordnet. Die Temperatursensoren 150, 144, 146 und 148 und eine Steuerungseinrichtung (nicht gezeigt) steuern die zugeordneten Heizeinrichtungen 118, 120, 122 und 124 so, dass der Kabine 126 oder den Bereichen der Sitze 138, 140 und 142 Luft mit einer gewünschten Temperatur zugeführt wird.

Die Zentralklimaanlage 102 muss den Luftstrom 106 mit der Temperatur bereitstellen, die der niedrigsten Temperatur entspricht, die in der Kabine 126 und den Bereichen der Sitze 138, 140 und 142 gewünscht ist. Wird in einem der Bereiche der Sitze 138, 140 und 142 eine Temperatur gewünscht, die wesentlich niedriger als die in der Kabine 126 gewünschte Temperatur ist, muss die Heizeinrichtung 118 für die Kabine viel Energie aufwenden, um den Luftstrom 108 auf die gewünschte Temperatur zu bringen. Ist die Heizeinrichtung 118 eine elektrische Heizeinrichtung, muss diese relativ viel elektrische Energie aufwenden. In einem Luftfahrzeug sind Verbraucher, die viel elektrische Energie verbrauchen, unerwünscht, da die elektrische Energie relativ aufwendig und mit relativ hohen Verlusten aus Rotationsenergie der Turbinen gewonnen werden muss. Alternativ hierzu kann die Heizeinrichtung 118 Trimmventile aufweisen, die Triebwerkszapfluft zuführen. Das erfordert jedoch relativ große Zapfluftkanäle, die durch die Kabine geführt werden müssen. Dies ist unerwünscht, da zusätzlicher Raum für die Zapfluftkanäle benötigt wird und die Masse des Luftfahrzeuges steigt.

Es ist eine Aufgabe der Erfindung, ein verbessertes Klimaanlagensystem zum individuellen Klimatisieren von Bereichen einer Kabine eines Luftfahrzeuges zu schaffen.

Diese Aufgabe wird durch ein Klimaanlagensystem für ein Luftfahrzeug mit den Merkmalen das Anspruchs 1 beziehungsweise des dazugehörigen Verfahrensanspruch 10 gelöst.

Das Klimaanlagensystem kann in beliebigen Flughöhen und bei beliebigen Außentemperaturen einsetzbar sein. Auf Reiseflughöhe eines typischen Luftfahrzeuges herrschen Außentemperaturen von etwa -30°C bis etwa -50°C. Heutige Luftfahrzeuge fliegen typischerweise in einer Reiseflughöhe von etwa 9000 bis etwa 11000 m. Der Druck des Luftstroms für die Kabine kann etwa 700 bis etwa 800 mbar betragen, was einer Höhe von etwa 2000 m bis 3000 m über dem Meeresspiegel entspricht. Die Luft kann jedoch einen beliebigen Druck aufweisen, bei dem ein Mensch ohne zusätzliches Atmungsgerät atmen kann. Die auf einer Verdunstungskühlung basierende Kühleinrichtung kann auch bei diesen Reiseflughöhen verwendet werden, da sie von den Umgebungsbedingungen außerhalb der Kabine unabhängig ist.

In einem Luftfahrzeug ist die Luft relativ trocken. Somit kann die Luft relativ viel Wasser aufnehmen, wodurch eine relativ starke Abkühlung erreicht wird.

Der einem Bereich der Kabine zuzuführende Luftstrom kann von einer zentralen Klimatisierungseinrichtung bereitgestellt werden. Es ist auch möglich, dass der einem Bereich der Kabine zuzuführende Luftstrom diesem Bereich entnommen wird, in der Kühleinrichtung durch die Verdunstungskühlung gekühlt wird und anschließend wieder diesem Kabinenbereich zugeführt wird. Es ist auch möglich, eine Heizeinrichtung vorzusehen, die den dem Bereich der Kabine zuzuführenden Luftstrom erwärmt, falls ein Heizen und kein Kühlen des Luftstroms erwünscht ist. Der dem Bereich der Kabine zuzuführende Luftstrom kann durch ein Gebläse dem Bereich entnommen werden und nach einem Temperieren wieder dem Bereich zugeführt werden.

Die Kühleinrichtung ist so ausgebildet, dass zur Kühlung Wasser in den dem Bereich der Kabine zuzuführenden Luftstrom verdunstet. Diese Ausgestaltung hat den Vorteil, dass der der Kabine zuzuführende Luftstrom befeuchtet wird, was den Komfort der Passagiere erhöhen kann.

Die Aufgabe wird durch ein Klimaanlagensystem für ein Luftfahrzeug zum individuellen Klimatisieren von Bereichen einer Kabine eines Luftfahrzeuges gelöst, das eine zentrale Klimatisierungseinrichtung aufweist, die einen Zentralluftstrom bereitstellt, der im Flug einen Druck, der höher als der Luftdruck außerhalb der Kabine ist, und eine Ist-Temperatur von T_{gist} aufweist. Das Klimaanlagensystem umfasst eine erste Zufuhrleitung, die dazu ausgebildet ist, einen Teil des Zentralluftstroms einem ersten Kabinenbereich zuzuführen. Eine Abzweigleitung des Klimaanlagensystems ist dazu ausgebildet, einen anderen Teil des Zentralluftstroms für zumindest einen weiteren Kabinenbereich abzuzweigen. Das Klimaanlagensystem umfasst ferner die zuvor beschriebene Kühleinrichtung. Die Kühleinrichtung kühlt den Luftstrom in der zumindest einen Abzweigleitung, falls die Ist-Temperatur T_{gist} des Luftstroms in der Abzweigleitung höher ist als die Soll-Temperatur T_{z1soll}, T_{z2soll,} T_{z3soll} des dem jeweiligen weiteren Bereich zuzuführenden Luftstroms.

Vorzugsweise umfasst das Klimaanlagensystem ferner eine Heizeinrichtung. Die Heizeinrichtung erwärmt den Luftstrom in der zumindest einen Abzweigleitung, falls die Ist-Temperatur des Luftstroms in der Abzweigleitung niedriger ist als die Soll-Temperatur T_{z1soll}, T_{z2soll}, T_{z3soll} des dem jeweiligen weiteren Bereich zuzuführenden Luftstroms.

Die Abzweigleitung kann einen Teil des Zentralluftstroms der Kühleinrichtung zuführen. An die Kühleinrichtung kann eine Mehrzahl von Verteilleitungen angeschlossen sein, die den aus der Kühleinrichtung austretenden Luftstrom aufteilen und die je einen Luftstrom einer Heizeinrichtung zuführen. An die Heizeinrichtung kann eine Leitung angeschlossen sein, die den aufgeteilten Luftstrom jeweils einem einer Mehrzahl von Kabinenbereichen zuführt. In diesem Fall wird ein Teil des Zentralluftstroms einem ersten Kabinenbereich zugeführt. Ein anderer Teil des Zentralluftstroms wird der Kühleinrichtung zugeführt, von wo er einer Mehrzahl von Heizeinrichtungen zugeführt wird. Von jeder der Heizeinrichtungen wird je ein Luftstrom einem weiteren Kabinenbereich zugeführt.

Eine Mehrzahl von Abzweigleitungen kann einen Teil des Luftstroms von der zentralen Klimatisierungseinrichtung abzweigen und je einen abgezweigten Luftstrom einer Kombination aus Heizeinrichtung und Kühleinrichtung zuführen. Eine einer Mehrzahl von Kabinenbereichszuführleitungen führt jeweils den Luftstrom aus der Kombination aus Heizeinrichtung und Kühleinrichtung einem Kabinenbereich zu. Bei dieser Ausgestaltung können in jeder Zuführleitung für einen Kabinenbereich eine Kühleinrichtung und eine Heizeinrichtung seriell oder parallel angeordnet sein.

Der erste Kabinenbereich und die weiteren Kabinenbereiche können voneinander separat sein. Die weiteren Kabinenbereiche können sich jedoch auch zumindest teilweise im ersten Kabinenbereich befinden. Dem ersten Kabinenbereich kann immer die von der Zentralklimaanlage abgegebene Luft mit der Ist-Temperatur T_{gist} zugeführt werden, ohne dass diese durch eine Kühleinrichtung oder eine Heizeinrichtung läuft. Die Heizeinrichtungen können ein Trimmventil aufweisen, durch das Triebwerkszapfluft zugeführt wird. Die Heizeinrichtungen können auch elektrische Heizeinrichtungen sein. Die zentrale Klimatisierungseinrichtung kann zumindest teilweise rezirkulierte Luft und/oder Zapfluft verwenden. Warme Triebwerkszapfluft kann in einem Flugzeug mit einer Turbine mit besonders niedrigen Energieverlusten bereitgestellt werden. Die Triebwerkszapfluft ist komprimierte Außenluft, die sich beim Komprimieren auf eine Temperatur erwärmt, die höher als die Temperatur eines einem Kabinenbereich zuzuführenden Luftstroms ist. Folglich muss die Triebwerkszapfluft gekühlt werden, was zu Energieverlusten führt. Da üblicherweise die Zapfluft dem Triebwerkskompressor entnommen wird, geht Energie in Form von Schub verloren. Alternativ kann statt Zapfluft von einem elektrischen Kompressor verdichtete Luft verwendet werden, wodurch allerdings noch höhere Energieverluste entstehen.

Es versteht sich, dass auch rezirkulierte Luft verwendet werden kann, was besonders niedrige Energieverluste mit sich bringt. Die zentrale Klimatisierungseinrichtung kann auf diese Weise warme und/oder unter Druck gesetzte Luft mit besonders niedrigen Energieverlusten bereitstellen. Die Kabinenluft kann auch rezirkuliert werden, falls das Volumen der von außerhalb der Kabine zugeführten Luft nicht ausreicht, um eine stabile Ventilation der Kabine zu erreichen.

Das Klimaanlagensystem kann ferner eine Steuerungseinrichtung umfassen, die die zentrale Klimatisierungseinrichtung derart steuert, dass die von ihr abgegebene Luft eine Ist-Temperatur T_{gist} aufweist, die im Wesentlichen der Soll-Temperatur T_{zcsoll}, T_{z1soll}, T_{z2soll}, T_{z3soll} des Kabinenbereichs entspricht, der den größten Luftvolumenstrom benötigt. Wie zuvor erwähnt wurde, kann die zentrale Klimatisierungseinrichtung warme Luft bei einem relativ niedrigen Energieverlust bereitstellen. Da die Ist-Temperatur T_{gist} des von der zentralen Klimatisierungseinrichtung abgegebenen Luftstroms im Wesentlichen der Soll-Temperatur des Kabinenbereichs entspricht, der den größten Luftvolumenstrom benötigt, kann das Klimaanlagensystem insgesamt mit einer niedrigen Verlustleistung betrieben werden. Wie eingangs erwähnt, ist es unerwünscht, dass den Heizeinrichtungen Triebwerkszapfluft als Trimmluft zugeführt wird, da hierzu separate Leitungen mit einem relativ großen Querschnitt und ein Ventil erforderlich sind. Die zusätzlichen Leitungen und das Ventil erhöhen die Masse des Luftfahrzeuges und sind somit unerwünscht. Ferner bringt eine lokale Heizung durch Trimmluft Sicherheitsprobleme und Isolationsprobleme aufgrund der hohen Temperatur der Trimmluft mit sich.

Elektrische Heizeinrichtungen sind bevorzugt, da diese keine Zapfluftzuführleitungen benötigen. Somit steht mehr Raum für andere Komponenten des Luftfahrzeuges zur Verfügung. Die elektrischen Heizeinrichtungen haben den Nachteil, dass die hierzu benötigte elektrische Energie lediglich mit einer relativ großen Verlustleistung erzeugt werden kann. Da jedoch die elektrischen Heizeinrichtungen nur einen relativ kleinen Luftvoiumenstrom heizen müssen, ist beim erfindungsgemäßen Klimaanlagensystem der Gesamtenergieverbrauch niedriger als bei dem zuvor beschriebenen Klimaanlagensystem des Standes der Technik. Eine elektrische Heizeinrichtung ist beispielsweise in kleinen Teilbereichen der Kabine leichter zu integrieren und bringt nicht das zuvor erwähnte Sicherheitsrisiko von heißer Trimmluft mit sich.

Die Heizeinrichtung kann eine Brennstoffzelle sein.

Die Steuerung bzw. Regelung des Klimaanlagensystems derart, dass die zentrale Klimatisierungseinrichtung einen Luftstrom mit einer Ist-Temperatur T_{gist} abgibt, die im Wesentlichen der Soll-Temperatur des Kabinenbereichs entspricht, der den größten Luftvolumenstrom benötigt, kann aus energetischer Sicht suboptimal sein. Das heißt, eine solche Steuerung bzw. Regelung könnte nicht zum niedrigsten Gesamtenergieverbrauch führen, wenn auch die Energieverluste berücksichtigt werden. Jedoch entsteht dadurch eine vereinfachte Systemarchitektur, die ein niedrigeres Gewicht aufweist, einen kleineren Einbauraum benötigt und eine höhere Zuverlässigkeit aufweist. Somit kann diese Systemarchitektur unter Umständen das geeignetere Konzept sein.

Die Steuerungseinrichtung kann die zentrale Klimatisierungseinrichtung, die zumindest eine Kühleinrichtung und die zumindest eine Heizeinrichtung so steuern, dass der Gesamtenergieverbrauch des Klimatisierungssystems minimal ist. Bei dem Gesamtenergieverbrauch wird der Energieverlust berücksichtigt, der beim Bereitstellen der warmen Luft oder beim Erwärmen von Luft entsteht. Bei dieser Ausgestaltung der Erfindung kann es erforderlich sein, dass jeder Luftstrom gekühlt und beheizt werden kann, also auch der dem ersten Bereich zuzuführende Luftstrom. Energieverluste entstehen beispielsweise durch das Umwandeln von Rotationsenergie in elektrische Energie. Ferner entstehen Energieverluste beim Abkühlen der Triebwerkszapfluft mit einer Temperatur von etwa 150°C bis etwa 200°C auf eine zur Klimatisierung der Luftfahrzeugskabine geeignete Temperatur.

Das Klimaanlagensystem stellt den einem Bereich der Kabine zuzuführenden Luftstrom nicht notwendigerweise mit der gewünschten Soll-Temperatur der Luft in der Kabine bereit, sondern mit der Temperatur bereit, die erforderlich ist, um die gewünschte Soll-Temperatur des Bereichs zu erreichen bzw. zu halten. Je nach Wärmelast durch die Passagiere und technische Einrichtungen, beispielsweise elektronische Einrichtungen, liegt die einem Bereich zuzuführende Luft zwischen etwa 0°C bis etwa 10°C unter der Soll-Temperatur des Bereichs.

Die zentrale Klimatisierungseinrichtung kann ein sogenanntes Pack sein. Dem Pack wird Triebwerkszapfluft zugeführt, die die zuvor erwähnte Temperatur von etwa 150°C bis etwa 200°C aufweist. Die Triebwerkszapfluft kann durch Stauluft gekühlt werden. Die Triebwerkszapfluft kann auch mehrere Entspannungs- und/oder Kompressionszyklen durchlaufen. Die Triebwerkszapfluft kann auch mehrmals in Wärmetauschern, beispielsweise durch Stauluft, gekühlt werden. Die Verwendung von Stauluft erhöht den Luftwiderstand des Flugzeuges, d.h. den Energieverlust beim Klimatisieren eines Bereichs der Kabine. Die vom Pack bereitgestellte Luft dient auch als Wärmesenke für rezirkulierte Luft. Die Temperatur des vom Pack bereitgestellten Luftstroms richtet sich üblicherweise nach der erforderlichen Kühlleistung in einem Bereich der Kabine, dem der Luftstrom zugeführt wird. Ferner erhöhen der bzw. die Wärmetauscher im Pack die Masse des Luftfahrzeuges und erhöhen den Druckverlust, beispielsweise aufgrund von Reibung, in der Stauluft und in dem vom Pack zu temperierenden Luftstrom.

Trimmluft ist Triebwerkszapfluft, die am Pack vorbeigeleitet wird, beispielsweise durch ein Bypass-Ventil, und somit wird die Trimmluft nicht gekühlt. Die Trimmluft kann mit niedrigeren Energieverlusten als die vom Pack bereitgestellte Luft bereitgestellt werden, da keine Energieverluste aufgrund der Kühlung im Pack entstehen. Die Trimmluft erhöht aber auch die vom Kompressor der Turbine bereitzustellende Zapfluftmenge und somit auch den Verlust an Schub.

Die zu minimierende Energie umfasst beispielsweise zum einen die zum Erzeugen der heißen Triebwerkszapfluft aufgewandte Energie, die zum Kühlen der Triebwerkszapfluft aufgewandte Energie und/oder die zum Rezirkulieren der Kabinenluft aufgewandte Energie. Dies ist die Energie, die erforderlich ist, um warme Luft durch die zentrale Klimatisierungseinrichtung bereitzustellen. Zum anderen umfasst die zu minimierende Energie die für die Verdunstungskühlung erforderliche Energie, beispielsweise die für das Bereitstellen des Wassers erforderliche Energie. Ferner umfasst die zu minimierende Energie die für die Heizeinrichtungen notwendige Energie. Bei einer elektrischen Heizeinrichtung ist der von der Heizeinrichtung verbrauchte Strom und der bei der Stromerzeugung entstehende Energieverlust zu berücksichtigen. Bei einer Heizeinrichtung mit Trimmventilen ist die zum Erzeugen der heißen Triebwerkszapfluft bzw. Trimmluft aufgewandte Energie zu berücksichtigen.

Die zum Erzeugen der heißen Triebwerkszapfluft aufgewandte Energie bewirkt einen Verlust an Schub. Dieser entsteht dadurch, dass der Kompressor des Triebwerks Außenluft ansaugt, verdichtet und dem Klimaanlagensystem bereitstellt. Die heiße Triebwerkszapfluft kann, wie zuvor beschrieben, dem Pack bereitgestellt werden und/oder als Trimmluft verwendet werden. Die zu minimierende Energiebilanz kann auch die zum Komprimieren der Außenluft erforderliche Energie zum Bereitstellen der Zapfluft umfassen. Dabei sind auch die Verluste im Pack aufgrund der Wärmetauscher und/oder der Entspannungs- und Kompressionszyklen im Pack zu berücksichtigen. Ferner kann der Energieverlust aufgrund der Luftwiderstandserhöhung des Luftfahrzeuges durch die Verwendung von Stauluft berücksichtigt werden. Es kann auch das Gewicht des mitzuführenden Wassers zum Kühlen des der Kabine zuzuführenden Luftstroms berücksichtigt werden. Im Allgemeinen kann kalte Luft nur mit höheren Energieverlusten als warme Luft bereitgestellt werden.

Ist die Soll-Temperatur des einem Kabinenbereich zuzuführenden Luftstroms niedriger als die Ist-Temperatur des von der zentralen Klimatisierungseinrichtung abgegebenen Luftstroms, kann der Luftstrom in der Kühleinrichtung gekühlt werden. Dies erfolgt durch Verdunstung, um möglichst wenig Energie beim Kühlen zu verbrauchen. Herkömmliche Verfahren umfassen die Kühlung von Luft mit einem Kühlmittel in einem Wärmetauscher oder die Zumischung von kalter Luft in lokalen Mischern. Die Verwendung eines Kühlmittels und eines Wärmetauschers ist relativ aufwendig. Ferner entstehen dabei aufgrund des Wirkungsgrades der Wärmetauscher und des Kühlkreislaufes Energieverluste. Da das Kühlmittel in einem Kreislauf geführt wird, sind eine Zuflussleitung und eine Abflussleitung erforderlich. Die Zumischung von kalter Luft in einem lokalen Mischer erfordert eine zusätzliche zentrale Klimaanlage zum Erzeugen der kalten Luft. Ferner sind Zuleitungen für die Kaltluft zu den lokalen Mischern erforderlich, die normalerweise einen relativ großen Querschnitt aufweisen müssen.

Da in der Kühleinrichtung Wasser in den Luftstrom verdunstet, verursacht die Kühleinrichtung keine oder relativ wenig Energieverluste. Da auch hiermit der Gesamtenergieverbrauch inklusive Energieverluste reduziert wird, kann der höhere technische Aufwand aufgrund der Kühleinrichtungen gerechtfertigt sein. Ist der Kabinenbereich, der den größten Luftvolumenstrom benötigt, beispielsweise konstruktiv, aufgrund seiner Größe und/oder seiner Wärmelasten, vorbestimmt, können die Kühleinrichtung und die Heizeinrichtung in der Kabinenbereichsluftzuführleitung für diesen Kabinenbereich entfalten. Dadurch wird die Masse des Luftfahrzeuges reduziert.

Die Kühleinrichtung kann Wasser in den Luftstrom sprühen. Die Kühleinrichtung kann mittels Ultraschall Wasser in den Luftstrom vernebeln. In der Kühleinrichtung kann Wasser aus einem porösen Material in den Luftstrom verdunsten. Ferner kann in der Kühleinrichtung Wasser an einer Membran in den Luftstrom verdunsten. Zur Kühlung des dem Bereich der Kabine zuzuführenden Luftstroms kann auch eine Blasensäule im Wasser verwendet werden. Es ist denkbar, dass Wasser zur Verdunstung durch Druckluft zerstäubt werden kann. Zur Erzeugung einer Verdunstungskälte kann ein mit Wasser benetzter Körper mit einer großen Oberfläche verwendet werden. Zur Benetzung kann sich der Körper in einem Wasserbad bewegen oder drehen oder der Körper kann mit Wasser betropft oder benetzt werden.

Die Erfindung betrifft auch ein Verfahren gemäß Anspruch 10 zum individuellen Klimatisieren eines Bereichs einer Kabine eines Luftfahrzeuges durch Kühlen eines einem Bereich der Kabine zuzuführenden Luftstroms durch Verdunsten von Wasser in einen Luftstrom, der im Flug unter einen Druck gesetzt ist, der höher als der Luftdruck außerhalb der Kabine ist. Das Wasser kann in den dem Bereich der Kabine zugeführten Luftstrom verdunsten.

Der Druck des Luftstroms kann die zuvor erwähnten Werte zwischen etwa 700 bis etwa 800 mbar aufweisen. Das Verfahren kann wie das zuvor beschriebene Klimaanlagensystem weitergebildet sein.

Der Luftstrom kann vor dem Kühlen dem Kabinenbereich entnommen werden, dem er nach dem Kühlen zugeführt wird. Der entnommene Luftstrom kann bedarfsweise durch eine Heizeinrichtung erwärmt werden, bevor er dem Bereich wieder zugeführt wird.

Das Verfahren kann folgende Schritte aufweisen:
- Bereitstellen eines Luftstroms, der im Flug unter einen Druck gesetzt ist, der höher als der Luftdruck außerhalb der Kabine ist,
- Temperieren des unter Druck gesetzten Luftstroms auf eine Ist-Temperatur T_{gist},
- Zuführen des temperierten Luftstroms mit der Ist-Temperatur T_{gist} zu einem ersten Kabinenbereich,
- Bereitstellen des temperierten Luftstroms mit der Ist-Temperatur T_{gist} zumindest einem weiteren Kabinenbereich, und
- Kühlen des dem zumindest einen weiteren Kabinenbereich bereitgestellten Luftstroms durch Verdunsten, bevor er dem jeweiligen weiteren Kabinenbereich zugeführt wird, falls die Soll-Temperatur T_{z1soll}, T_{z2soll}, T_{z3soll} des dem jeweiligen weiteren Bereich zuzuführenden Luftstroms niedriger als die Ist-Temperatur T_{gist} ist.

Das Verfahren kann ferner das Erwärmen des dem zumindest einen weiteren Kabinenbereich bereitgestellten Luftstroms aufweisen, bevor er dem jeweiligen weiteren Kabinenbereich zugeführt wird, falls die Solltemperatur T_{z1soll}, T_{z2soll}, T_{z3soll} des dem jeweiligen weiteren Bereich zuzuführenden Luftstroms höher als die Ist-Temperatur T_{gist} ist.

Das Verfahren kann bei einer ersten Ausgestaltung den temperierten Luftstrom mit der Ist-Temperatur T_{gist}, der den weiteren Kabinenbereichen zugeführt wird, auf die niedrigste Soll-Temperatur Tₛₒₗₗₘᵢₙ aller Solltemperaturen T_{z1soll}, T_{z2soll}, T_{z3soll} der weiteren Bereiche temperieren. Der Luftstrom mit der Solltemperatur Tₛₒₗₗₘᵢₙ wird in eine Mehrzahl von Luftströmen aufgeteilt, die je einem weiteren Kabinenbereich zugeordnet sind. Die aufgeteilten und je einem weiteren Kabinenbereich zuzuführenden Luftströme werden auf die jeweilige Soll-Temperatur T_{z1soll}, T_{z2soll}, T_{z3soll} erwärmt, falls die Soll-Temperatur des dem jeweiligen Kabinenbereich zuzuführenden Luftstroms höher als die niedrigste Soll-Temperatur Tₛₒₗₗₘᵢₙ aller Soll-Temperaturen T_{z1soll,} T_{Z2soll}, T_{z3soll} der weiteren Bereiche ist. Bei dieser Ausgestaltung ist lediglich eine Kühleinrichtung vorhanden, die die Luft für die weiteren Bereiche kühlt.

Bei einer anderen Ausgestaltung wird der temperierte Luftstrom in eine Mehrzahl von Luftströme aufgeteilt, die je einem weiteren Kabinenbereich zugeführt werden. Zumindest ein temperierter Luftstrom mit der Ist-Temperatur T_{gist}, der zumindest einem weiteren Kabinenbereich zugeführt wird, wird auf die Soll-Temperatur T_{z1soll}, T_{z2soll}, T_{z3soll} des dem jeweiligen weiteren Kabinenbereich zuzuführenden Luftstroms abgekühlt, falls die Soll-Temperatur des dem jeweiligen weiteren Bereich zuzuführenden Luftstroms niedriger als die Ist-Temperatur T_{gist} ist. Zumindest ein temperierter Luftstrom mit der Ist-Temperatur T_{gist}, der zumindest einem weiteren Kabinenbereich zugeführt wird, wird auf die Soll-Temperatur T_{z1soll}, T_{z2soll}, T_{z3soll} des dem weiteren Kabinenbereich zuzuführenden Luftstroms erwärmt, falls die Soll-Temperatur des dem jeweiligen weiteren Bereich zuzuführenden Luftstroms höher als die Ist-Temperatur T_{gist} ist. Die den weiteren Bereichen zuzuführende Luft wird zuerst aufgeteilt und dann, wie zuvor beschrieben, fallweise gekühlt oder erwärmt. Bei beiden Ausgestaltungen können sich die weiteren Bereiche separat vom ersten Kabinenbereich befinden. Die weiteren Bereiche können auch Teilbereiche des ersten Kabinenbereichs sein.

Die Ist-Temperatur T_{gist} des unter Druck gesetzten Luftstroms kann im Wesentlichen der Soll-Temperatur T_{czsoll}, T_{z1soll}, T_{z2soll}, T_{z3soll} des Kabinenbereichs entsprechen, der den größten Luftvolumenstrom benötigt. Wie zuvor erwähnt wurde, können dadurch der Energieverbrauch und insbesondere die Energieverluste reduziert werden. Die Ist-Temperatur T_{gist} des unter Druck gesetzten Luftstroms kann im Wesentlichen so gewählt sein, dass der Gesamtenergieverbrauch minimal ist. Beim Gesamtenergieverbrauch wird der Energieverlust berücksichtigt, der beim Bereitstellen warmer Luft, Erwärmen von Luft und Kühlen von Luft entsteht. Bei dieser Ausgestaltung der Erfindung kann es erforderlich sein, dass jeder Luftstrom gekühlt und erwärmt werden kann, also auch der dem ersten Bereich zuzuführende Luftstrom.

Die Erfindung betrifft auch die Verwendung von Wasser, das in einen einer Kabine eines Luftfahrzeuges zugeführten Luftstrom verdunstet, zum Kühlen des der Kabine zugeführten Luftstroms. Der Luftstrom kann von der zuvor beschriebenen zentralen Klimatisierungseinrichtung bereitgestellt werden und einen Druck höher als der Druck außerhalb der Kabine aufweisen. Der gekühlte Luftstrom kann einem oder mehreren Bereichen einer Kabine zugeführt werden. Der gekühlte Luftstrom kann einer Kabine mit nur einem Bereich zugeführt werden. Der gekühlte Luftstrom kann wie zuvor beschrieben zum Klimatisieren von Bereichen der Kabine eines Luftfahrzeuges verwendet werden.

Die Erfindung wird jetzt unter Bezugnahme auf die beigefügten Zeichnungen detaillierter beschrieben, wobei
- Figur 1: eine Ausführungsform des Klimaanlagensystems zeigt, bei der dem Bereich, der den größten Luftvolumenstrom benötigt, Luft direkt aus einer zentralen Klimatisierungseinrichtung zugeführt wird, und jede Zuführleitung zu einem weiteren Bereich eine Kühleinrichtung und eine Heizeinrichtung aufweist;
- Figur 2: eine Ausführungsform zeigt, bei der jede Zuführleitung zu einem Bereich der Kabine eine Kühleinrichtung und eine Heizeinrichtung aufweist;
- Figur 3: eine Ausführungsform zeigt, bei der die weiteren Bereichen zugeführten Luftströme von einer gemeinsamen Kühleinrichtung gekühlt werden;
- Figur 4: ein Mollier-h-x-Diagramm zeigt; und
- Figur 5: ein Klimatisierungssystem des Standes der Technik zeigt.

Üblicherweise ist eine Kabine eines Luftfahrzeuges in mehrere Bereiche eingeteilt, die als Zonen mit einer individuellen Soll-Temperatur betrachtet werden. Jede Zone kann eine eigene Temperaturregelung oder Temperatursteuerung umfassen. Die Soll-Temperaturen der Bereiche unterscheiden sich üblicherweise nur geringfügig. Jedoch können sich die Wärmelasten in den Bereichen beispielsweise aufgrund der Passagierdichte und der Anzahl von Verlustwärme abgebenden Geräten stark unterscheiden. Die Soll-Temperaturen des einem Bereich zuzuführenden Luftstrahls sind von den Wärmelasten im jeweiligen Bereich abhängig und unterscheiden sich folglich stark. Bereiche mit hohen Wärmelasten erfordern dementsprechend, dass Luft mit einer niedrigeren Soll-Temperatur zugeführt werden muss.

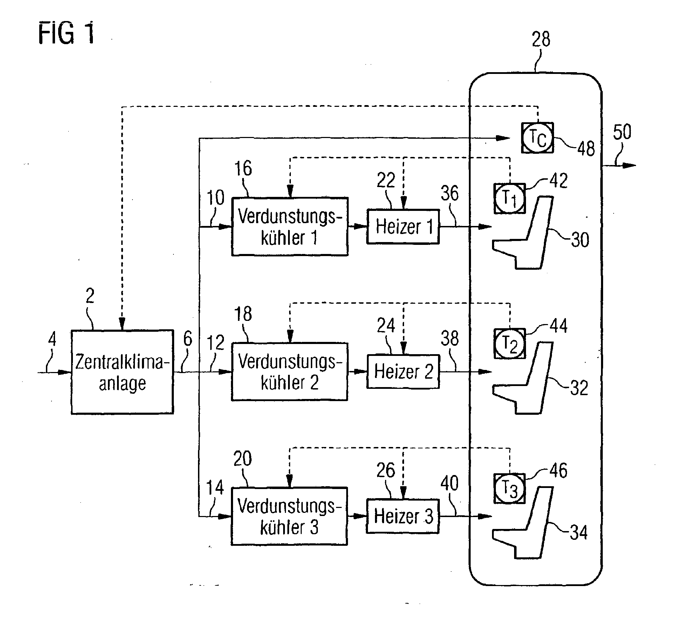

Figur 1 zeigt eine Ausführungsform der Erfindung, bei der dem Kabinenbereich, der den größten Luftvolumenstrom benötigt, Luft direkt aus einer zentralen Klimatisierungseinrichtung 2 zugeführt wird, ohne dass diese durch eine zusätzliche Kühleinrichtung oder Heizeinrichtung gekühlt bzw. erwärmt wird. Einer zentralen Klimatisierungseinrichtung 2 wird ein Luftstrom 4 zugeführt, der Triebwerkszapfluft und/oder aus einer Kabine 28 rezirkulierte Luft 50 aufweisen kann. Beim Austritt aus der zentralen Klimatisierungseinrichtung 2 weist der Luftstrom 6 einen höheren Luftdruck als die Luft außerhalb der Kabine auf. Der Luftstrom 6 wird über eine erste Kabinenzuführleitung in die Kabine 28 zugeführt. In der Kabine befinden sich weitere, individuell zu klimatisierende Bereiche, die die Umgebung je eines Sitzes 30, 32 und 34 bilden. Der Luftstrom 6 wird mit einer zweiten Zuführleitung 10 einer ersten Kühleinrichtung 16 und einer ersten Heizeinrichtung 22 zugeführt, bevor er als individuell klimatisierter Luftstrom 36 in die Umgebung des ersten Sitzes 30 eintritt. Dem zweiten Sitz 32 und dem dritten Sitz 34 wird ebenfalls über eine Zuführleitung 12 bzw. 14, eine Kühleinrichtung 18 bzw. 20 und eine Heizeinrichtung 24 bzw. 26 individuell klimatisierte Luft zugeführt. Die einer Zuführleitung zugeordnete Heizeinrichtung und Kühleinrichtung können seriell oder parallel angeordnet sein.

In der Kühleinrichtung verdunstet Wasser in den Luftstrom, der durch die Kühleinrichtung verläuft. In der Kühieinrichtung kann das Wasser in den Luftstrom durch eine Düse eingesprüht werden. Die Düse kann eine Ultraschall-Düse sein. Alternativ hierzu kann durch Ultraschall ein Wassernebel erzeugt werden. Dabei wird durch Ultraschall über einer Wasseroberfläche ein Nebel erzeugt, dessen Tröpfchen im Luftstrom verdunsten. Ferner kann in einem porösen Material oder einer Schüttung enthaltenes Wasser in den Luftstrom verdunsten. Ein Trägermaterial mit einer großen Oberfläche wird mit Wasser benetzt, das von der Oberfläche in den Luftstrom verdunstet. Die Verdunstung kann auch durch eine Membran erfolgen. Dabei verdunstet das Wasser vom flüssigen Zustand von einer Seite der Membran in den Luftstrom auf der anderen Seite der Membran. Zur Kühlung des dem Bereich der Kabine zuzuführenden Luftstroms kann auch eine Blasensäule im Wasser verwendet werden. Es ist denkbar, dass Wasser zur Verdunstung durch Druckluft zerstäubt werden kann. Zur Erzeugung einer Verdunstungskälte kann ein mit Wasser benetzter Körper mit einer großen Oberfläche verwendet werden. Zur Benetzung kann sich der Körper in einem Wasserbad bewegen oder drehen oder der Körper kann mit Wasser betropft oder benetzt werden. Es ist auch denkbar, dass die Verdunstung an einer wärmeübertragenden Fläche erfolgt. Dabei wird in einem Luft-Luft-Wärmetauscher an einer wärmeübertragenden Fläche im ersten von zwei Luftströmen Wasser verdunstet. Dadurch wird dieser Luftstrom befeuchtet und folglich gekühlt. Zusätzlich wird aufgrund der wärmeübertragenden Fläche dem zweiten Luftstrom Wärme entzogen, ohne dessen Wasserbeladung zu erhöhen. Dieser zweite Luftstrom kann einem Kabinenbereich zugeführt werden.

Das für die Verdunstung in den Kühleinrichtungen 16, 18, 20 benötigte Wasser kann in Tanks gespeichert werden, die befüllbar sind, und/oder es kann Kondenswasser aus einer beliebigen Klimatisierungseinrichtung im Luftfahrzeug gesammelt werden. Kann das Wasser zur Kühlung nicht an Bord gewonnen oder zurückgewonnen werden, muss es mitgeführt werden, was das Gewicht erhöht und Platz beansprucht. Dadurch entsteht auch ein Energieverlust, der berücksichtigt werden kann. Das Wasser könnte auch von einer oder mehreren Brennstoffzellen stammen, beispielsweise nach der Kondensation des Brennstoffzellenabgases an der kalten Außenhaut des Luftfahrzeuges. Das Wasser kann auch durch Kondensation von Luft, beispielsweise von aus der Kabine austretender Luft, an der kalten Außenhaut des Luftfahrzeuges gewonnen werden.

Bei dieser Ausführungsform benötigt die Kabine 28 den größten Luftvolumenstrom. Ein erster Temperatursensor 48 misst die Ist-Temperatur T_{cist} in der Kabine 28. Eine Steuerungseinrichtung (nicht gezeigt) vergleicht die Ist-Temperatur T_{cist} mit der Soll-Temperatur T_{csoll} in der Kabine 28. Die Steuerungseinrichtung berechnet daraus die Soll-Temperatur T_{zcoll} des über die erste Zuführleitung 8 in die Kabine 28 zuzuführenden Luftstroms. Die zentrale Klimatisierungseinrichtung 2 wird so gesteuert, dass die Ist-Temperatur T_{gist} des von ihr abgegebenen Luftstroms im Wesentlichen der Soll-Temperatur T_{zcsoll} des der Kabine 28 zuzuführenden Luftstroms entspricht.

Der zentralen Klimatisierungseinrichtung 2 kann rezirkulierte Luft 50 und/oder Triebwerkszapfluft zugeführt werden. Diese Warmluftquellen können die warme Luft bei einem besonders niedrigen Energieverlust bereitstellen. Die Klimaanlagensysteme des Standes der Technik weisen auch in der Leitung zum Kabinenbereich, der den größten Luftvolumenstrom benötigt, eine elektrische Heizeinrichtung auf. Elektrische Energie lässt sich in einem Luftfahrzeug nur mit einem relativ hohen Energieverlust erzeugen. Folglich benötigt das erfindungsgemäße Klimaanlagensystem insgesamt weniger Energie als ein Klimaanlagensystem des Standes der Technik.

Bei der Ausführungsform gemäß Fig. 1 befindet sich ein zweiter Kabinenbereich in der Umgebung des ersten Sitzes 30, ein dritter Kabinenbereich in der Umgebung des zweiten Sitzes 32 und ein vierter Kabinenbereich in der Umgebung des dritten Sitzes 34. Der zweite, dritte und vierte und Kabinenbereich können sich jedoch auch vom ersten Kabinenbereich 28 getrennt befinden.

In der Umgebung des ersten Sitzes 30 wird die Ist-Temperatur T₁ᵢₛₜ von einem zweiten Temperatursensor 42, die Ist-Temperatur T₂ᵢₛₜ in der Umgebung des zweiten Sitzes 32 von einem dritten Temperatursensor 44 und die Ist-Temperatur T₃ᵢₛₜ in der Umgebung des dritten Sitzes 34 von einem vierten Temperatursensor 46 erfasst. Der Umgebung des ersten Sitzes 30 wird die Soll-Temperatur T₁ₛₒₗₗ, der Umgebung des zweiten Sitzes 32 die Soll-Temperatur T₂ₛₒₗₗ und der Umgebung des dritten Sitzes 34 die Soll-Temperatur T₃ₛₒₗₗ zugewiesen. Die Soll-Temperaturen in der Umgebung der Sitze 30, 32 und 34 können zentral oder individuell für jeden Sitz, beispielsweise durch eine im Sitz eingebaute Einstelleinrichtung, vorgegeben werden.

Der Umgebung des ersten Sitzes 30 sind die erste Kühleinrichtung 16 und die erste Heizeinrichtung 22 zugeordnet. Über eine erste Abzweigleitung 10 wird der Kühleinrichtung 16 und der Heizeinrichtung 22 Luft zugeführt, die über eine zweite Zuführleitung 36 in die Umgebung des ersten Sitzes 30 eintritt. Eine Steuerungseinrichtung (nicht gezeigt) bestimmt aus der durch den zweiten Temperatursensor 42 ermittelten Ist-Temperatur T₁ᵢₛₜ und der Soll-Temperatur T₁ₛₒₗₗ der Umgebung des ersten Sitzes 30 die Soll-Temperatur T_{z1soll} des aus der zweiten Zuführleitung 36 in die Umgebung des ersten Sitzes 30 eintretenden Luftstroms. Die Luft in der ersten Abzweigleitung 10 weist die Ist-Temperatur T_{gist} auf. Ist die Ist-Temperatur T_{gist} höher als die Soll-Temperatur T_{z1soll} des Luftstroms in der zweiten Zuführleitung 36, kühlt die erste Kühleinrichtung 16 den Luftstrom auf die Soll-Temperatur T_{z1soll}. Ist die Ist-Temperatur T_{gist} niedriger als die Soll-Temperatur T_{z1soll} des Luftstroms in der zweiten Zuführleitung 36, erwärmt die erste Heizeinrichtung 22 den Luftstrom auf die Soll-Temperatur T_{z1soll}. Die Steuerung der ersten Kühleinrichtung 16 und der ersten Heizeinrichtung 22 basierend auf der Ist-Temperatur T_{gist} des von der zentralen Klimatisierungseinrichtung 2 abgegebenen Luftstroms, der Soll-Temperatur T_{z1soll} des der Umgebung des ersten Sitzes 30 zuzuführenden Luftstroms, sowie der Ist-Temperatur T₁ᵢₛₜ und der Soll-Temperatur T₁ₛₒₗₗ in der Umgebung des ersten Sitzes 30 kann durch eine dezentrale Steuerungseinrichtung erfolgen. Dies ist insbesondere bei großen Luftfahrzeugen erwünscht. Es ist aber auch denkbar, dass die zentrale Klimatisierungseinrichtung 2, die erste Kühleinrichtung 16 und die erste Heizeinrichtung 22 durch eine gemeinsame Steuerungseinrichtung gesteuert werden.

Die Steuerung der Temperatur des aus der dritten Zuführleitung 38 in die Umgebung des zweiten Sitzes 32 einströmenden Luftstroms erfolgt auf die gleiche Weise wie zuvor im Zusammenhang mit der Umgebung des ersten Sitzes 30 beschrieben wurde. Dazu bestimmt eine Steuerungseinrichtung aus der durch den dritten Temperatursensor 44 ermittelten Ist-Temperatur T₂ᵢₛₜ und der Soll-Temperatur T₂ₛₒₗₗ der Umgebung des zweiten Sitzes 32 die Soll-Temperatur T_{z2soll} des aus der dritten Zuführleitung 38 in die Umgebung des zweiten Sitzes 32 eintretenden Luftstroms. Die Steuerungseinrichtung steuert die zweite Kühleinrichtung 18 und die zweite Heizeinrichtung 24 so, dass der von der zentralen Klimatisierungseinrichtung 2 gelieferte Luftstrom mit der Ist-Temperatur T_{gist} auf die Soll-Temperatur T_{z2soll} des der Umgebung des zweiten Sitzes 32 zuzuführenden Luftstroms temperiert wird.

Die Steuerung der Temperatur des aus der vierten Zuführleitung 40 in die Umgebung des dritten Sitzes 34 einströmenden Luftstroms erfolgt auf die gleiche Weise wie zuvor im Zusammenhang mit der Umgebung des ersten Sitzes 30 und zweiten Sitzes 32 beschrieben wurde. Eine Steuerungseinrichtung bestimmt aus der durch den vierten Temperatursensor 46 ermittelten Ist-Temperatur T₃ᵢₛₜ und der Soll-Temperatur T₃ₛₒₗₗ der Umgebung des dritten Sitzes 34 die Soll-Temperatur T_{z3soll} des aus der vierten Zuführleitung 40 in die Umgebung des dritten Sitzes 34 eintretenden Luftstroms. Die Steuerungseinrichtung steuert die dritte Kühleinrichtung 20 und die dritte Heizeinrichtung 26 so, dass der von der zentralen Klimatisierungseinrichtung 2 gelieferte Luftstrom mit der Ist-Temperatur T_{gist} auf die Soll-Temperatur T_{z3soll} des der Umgebung des dritten Sitzes 34 zuzuführenden Luftstroms temperiert wird.

Die Steuerung der zweiten Kühleinrichtung 18 und der zweiten Heizeinrichtung 24 kann auch autark bzw. dezentral erfolgen. Ebenso kann die Steuerung der dritten Kühleinrichtung 20 und der dritten Heizeinrichtung 26 autark bzw. dezentral erfolgen. Es ist auch denkbar, dass eine Steuerungseinrichtung mehrere oder alle Kühleinrichtungen und Heizeinrichtungen steuert. Es kann auch eine Steuerungseinrichtung vorgesehen sein, die die zentrale Klimatisierungseinrichtung 2 und alle Kühleinrichtungen und Heizeinrichtungen steuert.

Im Zusammenhang dieser Anmeldung soll Steuern auch eine Regelung mit einem geschlossenen Regelkreis umfassen. In jedem Bereich kann die Soll-Temperatur lokal beeinflusst werden. Die Regelung kann für jeden Bereich über Sensoren in der Kabine durchgeführt werden. Für eine lokale Klimatisierung, beispielsweise eine Klimatisierung einer Umgebung eines Sitzes, eignet sich auch die Steuerung aufgrund menschlicher Wahrnehmung. Es kann dabei direkt der Soll-Wert der Temperatur des dem Bereich zuzuführenden Luftstroms eingestellt werden und/oder direkt die Heiz-/Kühlleistung eingestellt werden.

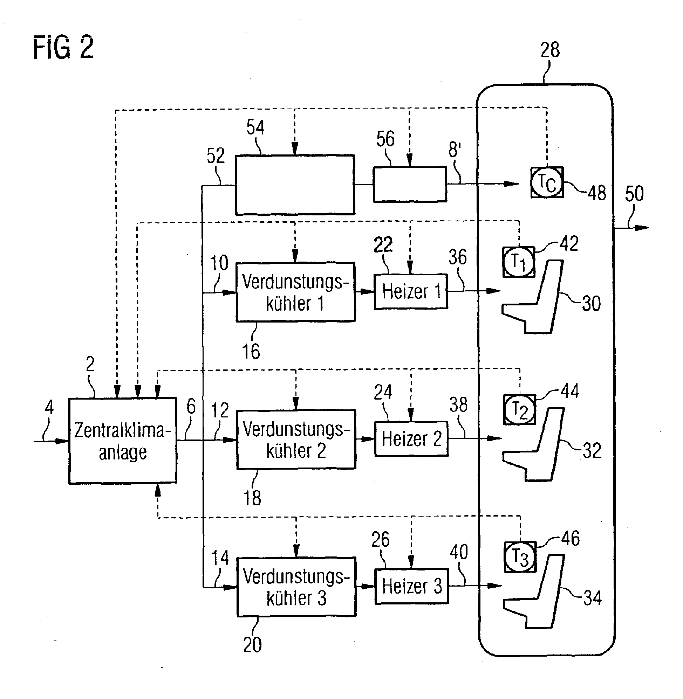

Figur 2 zeigt eine zweite Ausführungsform der Erfindung. Der Aufbau und die Funktionsweise der zweiten Ausführungsform entsprechen im Wesentlichen der der ersten Ausführungsform. Gleiche oder ähnliche Bauteile werden mit den gleichen Bezugszeichen wie in Figur 1 bezeichnet. Zusätzlich zur ersten Ausführungsform umfasst die zweite Ausführungsform eine Kabinenluftkühleinrichtung 54 und eine Kabinenluftheizeinrichtung 56. Eine Kabinenluftabzweigleitung 52 führt Luft von einer zentralen Klimatisierungseinrichtung 2 mit der Ist-Temperatur T_{gist} der Kabinenluftkühleinrichtung 54 und der Kabinenluftheizeinrichtung 56 zu. Ist die Ist-Temperatur T_{gist} der von der zentralen Klimatisierungseinrichtung 2 abgegeben Luft höher als die Soll-Temperatur T_{zcsoll} des von der ersten Zuführleitung 8' in die Kabine 28 zuzuführenden Luftstroms, steuert eine Steuerungseinrichtung (nicht gezeigt) die Kabinenluftkühleinrichtung 54 derart an, dass sie den von der zentralen Klimatisierungseinrichtung 2 zuzuführenden Luftstrom auf die Soll-Temperatur T_{zcsoll} abkühlt. Ist die Ist-Temperatur T_{gist} der von der zentralen Klimatisierungseinrichtung 2 gelieferten Luft niedriger als die Soll-Temperatur T_{zcsoll} des der Kabine 28 zuzuführenden Luftstroms, erwärmt die Kabinenluftheizeinrichtung 56 den Luftstrom auf die Soll-Temperatur T_{zcsoll}. In diesem Fall ist es möglich, die Ist-Temperatur T_{gist} der von der zentralen Klimatisierungseinrichtung abgegebenen Luft so zu wählen, dass der Gesamtenergieverbrauch des Klimaanlagensystems minimiert wird. Dies ist insbesondere dann nützlich, wenn die einzelnen Kabinenbereiche ähnliche Luftvolumenströme benötigen. In diesem Fall steuert die Steuerungseinrichtung die zentrale Klimatisierungseinrichtung 2, die Kühleinrichtungen 16, 18, 20, die Kabinenluftkühleinrichtung 54, die Heizeinrichtungen 22, 24, 26 und die Kabinenluftheizeinrichtung 56. Die einer Zuführleitung zugeordnete Heizeinrichtung bzw. Kabinenheizeinrichtung und Kühleinrichtung bzw. Kabinenkühleinrichtung können seriell oder parallel angeordnet sein.

Wie zuvor erwähnt, umfasst die zu minimierende Energie beispielsweise zum einen die zum Erzeugen der heißen Triebwerkszapfluft aufgewandte Energie, die zum Kühlen der Triebwerkszapfluft aufgewandte Energie und/oder die zum Rezirkulieren der Kabinenluft aufgewandte Energie. Dies ist die Energie, die erforderlich ist, um warme Luft durch die zentrale Klimatisierungseinrichtung bereitzustellen. Zum anderen umfasst die zu minimierende Energie die für die Verdunstungskühlung erforderliche Energie, beispielsweise die für das Bereitstellen des Wassers erforderliche Energie. Ferner umfasst die zu minimierende Energie die für die Heizeinrichtungen notwendige Energie. Bei einer elektrischen Heizeinrichtung ist der von der Heizeinrichtung verbrauchte Strom und der bei der Stromerzeugung entstehende Energieverlust zu berücksichtigen. Bei einer Heizeinrichtung mit Trimmventilen ist die zum Erzeugen der heißen Triebwerkszapfluft bzw. Trimmluft aufgewandte Energie zu berücksichtigen. Falls die entnommene Trimmluft die dem Pack zugeführte Zapfluftmenge reduziert, kann auch berücksichtigt werden, dass der Energieverlust im Pack reduziert wird, weil im Pack weiniger Zapfluft gekühlt werden muss.

Wie zuvor erwähnt, bewirkt die zum Erzeugen der heißen Triebwerkszapfluft aufgewandte Energie einen Verlust an Schub. Dieser entsteht dadurch, dass der Kompressor des Triebwerks Außenluft ansaugt, verdichtet und dem Klimaanlagensystem bereitstellt. Die heiße Triebwerkszapfluft kann, wie zuvor beschrieben, dem Pack bereitgestellt werden und/oder als Trimmluft verwendet werden. Die zu minimierende Energiebilanz kann auch die zum Komprimieren der Außenluft erforderliche Energie zum Bereitstellen der Zapfluft umfassen. Es sind auch die Verluste im Pack aufgrund der Wärmetauscher und/oder der Entspannungs- und Kompressionszyklen im Pack zu berücksichtigen. Ferner kann der Energieverlust aufgrund der Luftwiderstandserhöhung des Luftfahrzeuges durch die Verwendung von Stauiuft berücksichtigt werden. Es kann auch das Gewicht des mitzuführenden Wassers zum Kühlen des der Kabine zuzuführenden Luftstroms berücksichtigt werden. Im Allgemeinen kann kalte Luft nur mit höheren Energieverlusten als warme Luft bereitgestellt werden.

Da das erfindungsgemäße Klimaanlagensystem die Luft ohne oder nahezu ohne Verlustleistung kühlen kann, und eine Heizeinrichtung, falls sie elektrisch betrieben wird, aufgrund der Energieverluste beim Erzeugen des elektrischen Stroms relativ hohe Energieverluste verursacht, kann es sinnvoll sein, die Ist-Temperatur T_{gist} auf die höchste Soll-Temperatur der den Kabinenbereichen zuzuführenden Luftströme einzustellen. Dies ist insbesondere sinnvoll, wenn ein Kabinenbereich nur eine geringfügig höhere Temperatur als die anderen Kabinenbereiche erfordert. Die den anderen Kabinenbereichen zuzuführende Luft kann durch die Verdunstungskühlung gekühlt werden. Wie zuvor erwähnt wurde, kann die zentrale Klimatisierungseinrichtung 2 warme Luft bei einem relativ niedrigen Energieverlust bereitstellen, falls beispielsweise rezirkulierte Luft 50 oder Triebwerkszapfluft verwendet wird. Die Ist-Temperatur T_{gist} des von der zentralen Klimatisierungseinrichtung 2 abgegebenen Luftstroms kann auf eine beliebige Temperatur eingestellt werden, die zwischen der niedrigsten und der höchsten der Soll-Temperaturen der den Kabinenbereichen zuzuführenden Luftströme liegt.

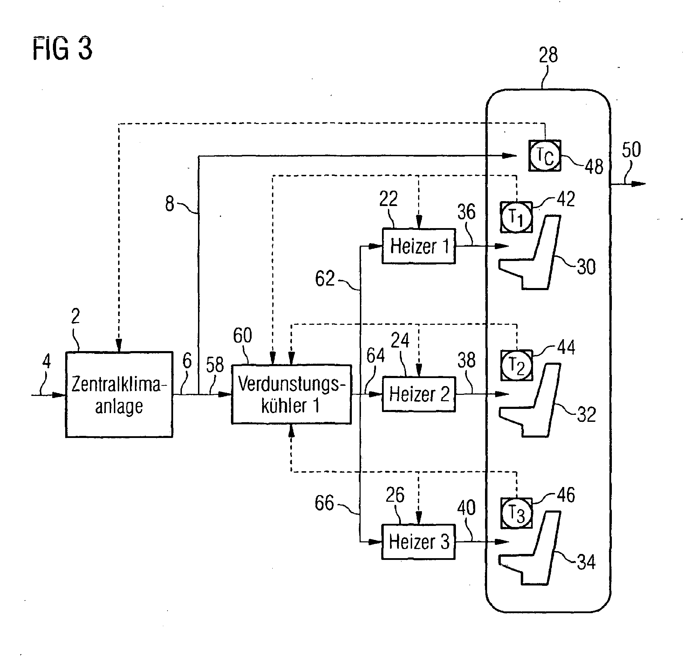

Die Figur 3 zeigt eine dritte Ausführungsform der Erfindung. Die dritte Ausführungsform unterscheidet sich von der ersten Ausführungsform gemäß Figur 1 dadurch, dass ein von einer ersten Leitung 6 in eine gemeinsame Abzweigleitung 58 abgezweigter Luftstrom einer zentralen Kühleinrichtung 60 zugeführt wird. Von der zentralen Kühleinrichtung 60 wird ein Luftstrom über eine erste Verteilleitung 62 einer ersten Heizeinrichtung 22 zugeführt, von wo er über eine zweite Zuführleitung der Umgebung eines ersten Sitzes 30 zugeführt wird. Über eine zweite Verteilleitung 64 wird ein Teil des Luftstroms von der zentralen Kühleinrichtung 60 einer zweiten Heizeinrichtung 24 zugeführt, von wo er über eine dritte Zuführleitung 38 der Umgebung eines zweiten Sitzes 32 zugeführt wird. Ein anderer Teil des Luftstroms von der zentralen Kühleinrichtung 60 wird über eine dritte Verteilleitung 66 einer dritten Heizeinrichtung 26 zugeführt, von wo er über eine vierte Zuführleitung 40 der Umgebung eines dritten Sitzes 34 zugeführt wird. Die Steuerung der Ist-Temperatur T_{gist} des von der zentralen Klimatisierungseinrichtung 2 abgegebenen Luftstroms erfolgt wie unter der ersten Ausführungsform gemäß Figur 1 beschrieben wurde.

Die Ist-Temperatur T_{gist} des von der zentralen Klimatisierungseinrichtung 2 abgegebenen Luftstroms entspricht somit der Soll-Temperatur T_{zcsoll} der Kabine 28. Bevorzugt entspricht die Ist-Temperatur T_{gist} des von der zentralen Klimatisierungseinrichtung 2 abgegebenen Luftstroms im Wesentlichen der Soll-Temperatur des Kabinenbereichs, der den größten Luftvolumenstrom benötigt.

Ein zweiter Temperatursensor 42 erfasst die Ist-Temperatur Tₗᵢₛₜ in der Umgebung des ersten Sitzes 30, ein dritter Temperatursensor 44 die Ist-Temperatur T₂ᵢₛₜ in der Umgebung des zweiten Sitzes 32 und ein vierter Temperatursensor 46 erfasst die Ist-Temperatur T₃ᵢₛₜ in der Umgebung des dritten Sitzes 34. Eine Steuerungseinrichtung (nicht gezeigt) vergleicht die Ist-Temperaturen T₁ᵢₛₜ, T₂ᵢₛₜ und T₃ᵢₛₜ mit den Soll-Temperaturen T₁ₛₒₗₗ, T₂ₛₒₗₗ und T₃ₛₒₗₗ der Umgebungen der Sitze 30, 32 und 34 und berechnet daraus die Soll-Temperatur T_{z1soll} des der Umgebung des ersten Sitzes 30 zuzuführenden Luftstroms, die Soll-Temperatur T_{z2soll} des der Umgebung des zweiten Sitzes 32 zuzuführenden Luftstroms und die Soll-Temperatur T_{z3soll} des der Umgebung des dritten Sitzes 34 zuzuführenden Luftstroms.

Ist eine Soll-Temperatur T_{z1soll}, T_{z2}soll, T_{z3soll} niedriger als die Ist-Temperatur T_{gist} des von der zentralen Klimatisierungseinrichtung 2 abgegebenen Luftstroms, kühlt die zentrale Klimatisierungseinrichtung 60 den von der zentralen Abzweigleitung 58 gelieferten Luftstrom auf die niedrigste der Soll-Temperaturen T_{z1soll}, T_{z2soll}, T_{z3soll}, der den Umgebungen der Sitze 30, 32, 34 zuzuführenden Luftströme ab. Entspricht die Ist-Temperatur des aus der zentralen Kühleinrichtung 60 austretenden Luftstroms der Soll-Temperatur eines in eine Umgebung eines Sitzes zuzuführenden Luftstroms, muss die entsprechende Heizeinrichtung den Luftstrom nicht erwärmen. Entspricht beispielsweise die Ist-Temperatur des von der zentralen Kühleinrichtung 60 abgegebenen Luftstroms der Soll-Temperatur T_{z1soll} des der Umgebung des ersten Sitzes 30 zuzuführenden Luftstroms, muss somit die erste Heizeinrichtung 22 den Luftstrom nicht erwärmen.

Ist die Soll-Temperatur eines einer Umgebung eines Sitzes zuzuführenden Luftstroms höher als die Ist-Temperatur des von der zentralen Kühleinrichtung 60 abgegebenen Luftstroms, muss die diesem Luftstrom zugeordnete Heizeinrichtung den Luftstrom auf die Soll-Temperatur des entsprechenden Luftstroms erwärmen. Ist beispielsweise die Soll-Temperatur T_{z2soll} des der Umgebung des zweiten Sitzes 32 zuzuführenden Luftstroms höher als die Ist-Temperatur des von der zentralen Kühleinrichtung 60 abgegebenen Luftstroms, muss die zweite Heizeinrichtung 24 den von der zweiten Verteilleitung 64 abgegebenen Luftstroms auf die Soll-Temperatur T_{z2soll} erwärmen.

Diese Ausführungsform eignet sich besonders für Luftfahrzeuge, bei denen eine Mehrzahl kleiner Bereiche, beispielsweise Umgebungen von Sitzen, mit kühler Luft versorgt werden müssen.

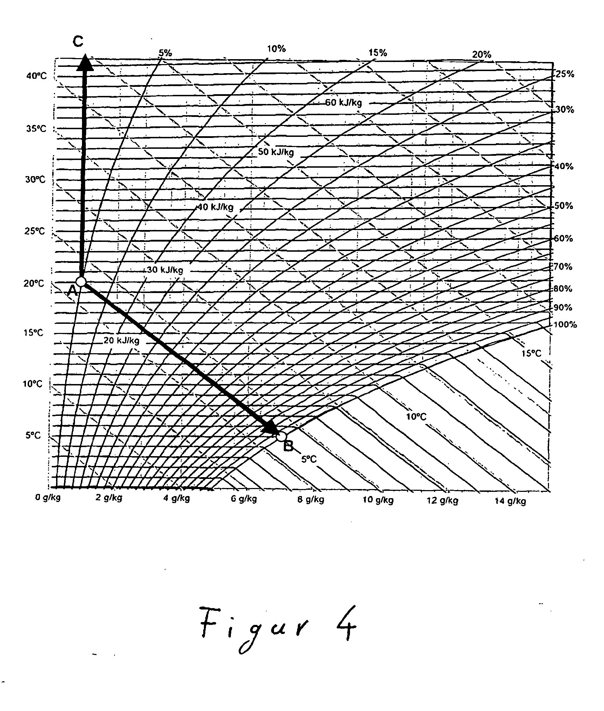

Figur 4 stellt ein Mollier-h-x-Diagramm bei einem Luftdruck von etwa 782 hPa dar, der einer Höhe von 7000 Fuß (etwa 2134 m) über dem Meeresspiegel entspricht. Der Punkt A stellt dabei eine einer Verdunstungskühleinrichtung zugeführte Luft mit 20°C bei 5% relativer Feuchte dar. Dies entspricht etwa den Anforderungen an eine individuell regelbare Belüftung in der Business-Klasse eines Luftfahrzeuges auf Reiseflughöhe. Der Punkt B kennzeichnet den Punkt mit der durch eine Verdunstungskühlung erreichbaren niedrigsten Temperatur, d.h. etwa 5°C. Der vom Punkt A in Richtung des Punkts C ausgehende Strahl stellt die durch Heizen erreichbare Temperatur in Verbindung mit der relativen Luftfeuchtigkeit dar. Beim Einsatz eines Verdunstungskühlverfahrens darf in einem Luftfahrzeug nicht die maximale relative Luftfeuchte von 100% erreicht werden, da dies mit einer erheblichen Kondensation an kühlen Oberflächen und folglich mit einer Korrosion verbunden wäre. Bei einer realistischen maximalen Feuchte von 50% am Luftauslass kann der Luftstrom im hier genannten Beispiel von etwa 20°C auf etwa 10°C abgekühlt werden.

Das erfindungsgemäße Verfahren und das erfindungsgemäße Klimaanlagensystem stellen eine steuerbare bzw. regelbare Abkühlung und Erwärmung von lokalen Luftströmen bereit. Durch die Steuerung der zentralen Klimatisierungseinrichtung basierend auf der Soll-Temperatur der den einzelnen Kabinenbereichen zuzuführenden Luftströme, kann der Energiebedarf des Klimaanlagensystems minimiert werden, wenn auch der Energieverlust, der beispielsweise beim Erwärmen oder Kühlen von Luft auftritt, mitberücksichtigt wird. Die Wasserzuleitungen zu den Kühleinrichtungen mit der Verdunstungskühlung erfordern einen geringen Platzbedarf, im Vergleich zu einer Kaltluftzufuhrleitung oder der Hin- und Rückleitung, die bei einer Kühlung durch ein zirkulierendes Kühlmittel erforderlich wären. Da Wasser an Bord eines Luftfahrzeuges vorhanden ist, ist kein zusätzliches Kühlmittel erforderlich. Bevorzugt kann bei der Verdunstung in den Kühleinrichtungen Kondenswasser verwendet werden, da das Kondenswasser an einer kalten Fläche, beispielsweise in einem Verdampfer für ein Kühlmittel oder an der Flugzeugaußenhaut, gesammelt werden kann und das Kondenswasser im Wesentlichen keinen Kalk, keine Salze oder andere gelöste Stoffe aufweist. Es kann sich ein geringer Raumbedarf für die Kühleinrichtung(en) ergeben. Der Energiebedarf zur Kühlung des Luftstroms wird reduziert, da iedigiich Wasser bereitgestellt und zerstäubt werden muss. Die Kühlung durch Verdunstung hat eine kleine Totzeit bzw. Zeitkonstante. Durch die lokale Erhöhung der Luftfeuchtigkeit wird der Komfort, insbesondere auf Langstreckenflügen, für einen Passagier erhöht. Die Verdunstungskühlung kann sowohl zur Klimatisierung der Kabine oder eines Kabinenbereichs verwendet werden. Die Verdunstungskühlung kann auch für eine lokale Klimatisierung verwendet werden, beispielsweise zur Klimatisierung der Umgebung eines Sitzes.

Ein weiterer Vorteil der Erfindung ist, dass jedem Bereich frische Luft zugeführt wird, d.h. Luft, die in der zentralen Klimatisierungseinrichtung aufbereitet wurde. Dadurch wird auch der Komfort des Passagiers erhöht.

## Patentansprüche

1. Klimaanlagensystem für ein Luftfahrzeug zum Individuellen Klimatisieren von Bereichen (28, 30, 32, 34) einer Kabine (28) eines Luftfahrzeuges, mit einer zentralen Klimatisierungseinrichtung (2), die zum Bereitstellen eines Zentral-luftstroms ausgebildet ist, der im Flug einen über dem Luftdruck außerhalb der Kabine (28) liegenden Druck und eine Ist-Temperatur (T_{gist}) aufweist;
- einer ersten Zuführleitung (8), die dazu ausgebildet ist, einen Teil des Zeniralluftstroms einem ersten Kabinenbereich (28) zuzuführen, und
- zumindest einer Abzweigleitung (10, 12, 14; 58), die dazu ausgebildet ist, einen anderen Teil des Zentralluftstroms zumindest einem weiteren Kabinenbereich (30, 32, 34) zuzuführen,
**gekennzeichnet durch** eine Kühleinrichtung (16, 18, 20; 60), die den Luftstrom in der zumindest einen Abzweigleitung (10, 12, 14; 58) kühlt, falls die Ist-Temperatur (T_{gist}) des Luftstroms In der Ahzwcigleitung (10, 12, 14; 58) höher ist als die Soll-Temperatur (T_{z1soll}, T_{z2soll}), T_{z3soll}) des dem jeweiligen weiteren Bereich (30, 32, 34) zuzuführenden Luftstroms, wobei die Kühleinrichtung (16,18, 20; 60) dazu ausgebildet ist, zum Kühlen Wasser in den einem Bereich (28, 30, 32, 34) der Kabine (26) zuzuführenden Luftstrom zu verdunsten.

2. Klimaanlagensystem nach Anspruch 1,
**gekennzeichnet durch** eine Steuerungseinrichtung, die dazu ausgebildet ist, die Kühleinrichtung (16, 18, 20; 60) basierend auf einer gemessenen Ist-Temperatur (T_{gist}) so anzusteuern, dass der Luftstrom in der Abzweigleitung (10, 12, 14; 58) auf die Soll-Temperalur (T_{z1soll}, T_{z2soll}, T_{z3soll}) des dem jeweiligen Bereich (30, 32,34) zuzuführenden Luftstroms abgekühlt wird.

3. Klimaanlagensystem nach Anspruch 1 oder 2,
**dadurch gekennzeichnet, dass** die Kühleinrichtung (16, 18, 20; 60) dazu ausgebildet ist, zur Kühlung Wasser in den dem Bereich (28, 30, 32, 34) der Kabine (28) zugeführten Luftstrum zu verdunsten,

4. Klimaanlagensystem nach einem der Ansprüche 1 bis 3,
**gekennzeichnet durch** eine Heizeinrichtung (22, 24, 26), die den Luftstrom in der zumindest einen Abzweigleitung (10, 12, 14) erwärmt, falls die Ist-Temperatur des Luftstroms niedriger ist als eine Soll-Temperatur (T_{z1soll}, T_{z2soll}, T_{z3soll}) des dem jeweiligen weiteren Bereich (30, 32, 34) zuzuführenden Luftstroms.

5. Klimaanlagensystem nach Anspruch 4,
**dadurch gekennzeichnet, dass** die Abzweigleitung (58) einen Teil des Zentralluftstroms der Kühleinrichtung (60) zuführt, wobei an die Kühleinrichtung eine Mehrzahl von Verteilleitungen (62, 64, 66) angeschlossen ist, die den aus der Kühleinrichtung (60) austretende Luftstrom aufteilen und je einen aufgeteilten Luftstrom einer Heizeinrichtung (22, 24, 26) zuführen, und dass an die Heizeinrichlungen (22, 24, 26) je zumindest eine Zuführleitung (36, 38, 40) angeschlossen ist, die den Luftstrom jeweils einem einer Mehrzahl von Kabinenbereichen (30, 32, 34) zuführt.

6. Klimaanlagensystem nach Anspruch 4,
**dadurch gekennzeichnet, dass** eine Mehrzahl von Abzweigleitungen (10, 12, 14), die einen Teil des Luftstroms von der zentralen Klimatisierungseinrichtung (2) abzweigen und je einen abgezweigten Luftstrom einer Kombination aus Heizeinrichtung (22, 24, 26) und Kühleinrichtung (16, 18, 20) zufuhren, und eine Mehrzahl von Zuführleitungen (36, 38, 40) vorhanden sind, die je den Luftstrom aus einer Kombination aus Heizeinrichtung (16, 18, 20) und Kühleinrichtung (22, 24, 26) zu einem Kabinenbereich (30, 32, 34) führen.

7. Klimaanlagensystem nach einem der Ansprüche 1 bis 6,
**dadurch gekennzeichnet, dass** eine Steuerungseinrichtung die zentrale Klimatisierungseinrichtung (2) so steuert, dass die von ihr abgegebene Luft eine IstTemperatur (T_{gist}) aufweist, die im Wesentlichen der Soll-Temperatur (T_{zcsoll}, T_{z1soll}, T_{z2soll}, T_{z3soll}) des Kabinenbereichs (28, 30, 32, 34) entspricht, der den größten Luftvolumenstrom benötigt.

8. Klimaanlagensystem nach einem der Ansprüche 1 bis 7,
**dadurch gekennzeichnet, dass** die Steuerungseinrichtung die zentrale Klimatisierungseinrichtung (2), die zumindest eine Kühleinrichtung (16, 18, 20; 60) und die zumindest eine Heizeinrichtung, (22, 24, 26) so steuert, dass der Gesamtenergieverbrauch des Klimaanlagensystems minimal ist.

9. Klimaanlagensystem nach einem der Ansprüche 1. bis 8,
**dadurch gekennzeichnet, dass**
- die Kühleinrichtung (16, 18, 20; 60) Wasser in den Luftstrorn sprüht, Wasser durch Ultraschall in den Luftstroms vernebelt und/oder Wasser durch Druckluft In den Luftstrom zerstäubt, oder
- die Kühleinrichtung (16, 18, 20; 60) so ausgebildet ist, dass der dem Kabinenbereich (28, 30, 32, 34) zuzuführende Luftstrom eine Blasensäule durchläuft, oder
- die Kühleinrichlung (16,18, 20; 60) so ausgebildet ist, dass in einem porösen Material enthaltenes Wasser in den Luftstrom und/oder Wasser an einem Körper mit einer großen Oberfläche verdunstet, oder
- die Kühleinrichtung (16, 18, 20; 60) so ausgebildet ist, dass Wasser an einer Membran in den Luftstrom verdunstet.

10. Verfahren zum individuellen Klimatisieren eines Bereiches (28, 30, 31, 34) einer Kabine (28) eines Luftfahrzeuges, mit den folgenden Schritten:
- Bereitstellen eines Luftstroms, der im Flug unter einen Druck gesetzt ist, der höher als der Luftdruck außerhalb der Kabine ist;
- Temperieren des unter Druck gesetzten Luftstroms auf eine Ist-Temperatur (T_{gist});
- Zuführen des temperlerlen Luftstroms mit der Ist-Temperatur (T_{gist}) zu einem ersten Kabinenbereich (28); und
- Bereitstellen des temperierten Luftstroms mit der Ist-Temperatur (T_{gist}) zumindest einem weiteren Kabinenbereich (30, 32, 34);
**gekennzeichnet durch**
- Kühlen des dem zumindest einen weiteren Kabinenbereich (30, 32, 34) bereitgestellten Luftstroms **durch** Verdunsten von Wasser, bevor er dem jeweiligen weiteren Kabinenbereich (30, 32, 34) zugeführt wird, falls die Soll-Temperatur (T_{z1soll}, T_{z2soll}, T_{z3soll}) des dem jeweiligen weiteren Kabinenbereich (30, 32, 34) zuzuführenden Luftstroms niedriger als die Ist-Temperatur (T_{gist}) ist.

11. Verfahren nach Anspruch 11, **gekennzeichnet durch**
- Steuern des Kühlens des zumindest einem weiteren Kabinenbereich (30, 32, 34) zugeführten Luftstroms basierend auf einer gemessenen Ist-Temperatur (T_{gist}) so, dass dieser Luftstroms mit der Soll-Temperatur (T_{z1soll}, T_{z2soll}, T_{z3soll}) des diesem Kabinenbereich (30, 32, 34) zuzuführenden Luftstroms in diesen Kabinenbereich (30, 32, 34) eintritt.

12. Verfahren nach Anspruch 10 oder 11, **gekennzeichnet durch**
- Verdunsten von Wasser in den dem Bereich (28, 30, 32, 34) der Kabine (28) zuzuführenden Luftstrom.

13. Verfahren nach einem der Ansprüche 9 bis 12, **gekennzeichnet durch**
- Entnehmen von Luft aus dem Kabinenbereich (28, 30, 32, 34), dem der Luftstrom zuzuführen ist, wobei der entnommene Luftstrom gekühlt wird, bevor er dem Kablnenbereich (28, 30, 32, 34) wieder zugeführt wird.

14. Verfahren nach einen der Ansprüche 9 bis 13, **gekennzeichnet durch**
- Erwärmen des dem zumindest einen weiteren Kabinenbereich (30, 32, 34) bereitgestellten Luftstroms, bevor er dem jeweiligen weiteren Kabinenbereich (30, 32, 34) zugeführt wird, falls die Soll-Temperatur (T_{z1soll}, T_{z2soll}, T_{z3soll}) des dem jeweiligen weiteren Kabinenbereich (30, 32, 34) zuzuführenden Luftstroms höher als die ist-Temperatur (T_{gist}) ist.

15. Verfahren nach Anspruch 14, **gekennzeichnet durch**
- Kühlen des temperierten Luftstroms mit der Ist-Temperatur (T_{gist}), der den weiteren Kabinenbereichen zugeführt wird, auf die niedrigste Soll-Temperatur (Tₛₒₗₗₘᵢₙ) aller Soll-Temperaturen (T_{z1soll}, T_{z2soll}, T_{z3soll}) der weiteren Kabinenbereiche (30, 32, 34);
- Aufteilen des Luftstroms mit der Soll-Temperatur (Tₛₒₗₗₘᵢₙ) in eine Mehrzahl von Luftströmen, die je einem weiteren Kabinenbereich (30, 32, 34) zugeordnet sind;
- Erwärmen der aufgeteilten und den jeweiligen weiteren Kabinenbereichen (34, 32, 34) zuzuführenden Luftströme auf die jeweilige Soll-Temperatur (T_{z1soll}, T_{z2soll}, T_{z3soll}), falls die Soll-Temperatur des dem jeweiligen Kabinenbereich (30, 32, 34) zuzuführenden Luftstroms höher als die niedrigste Soll-Temperatur (Tₛₒₗₗₘᵢₙ) aller Soll-Temperaturen (T_{z1soll}, T_{z2soll}, T_{z3soll}) der weiteren Zonen ist.

## Claims

1. Air conditioning system for an aircraft for the individual air conditioning of regions (28, 30, 32, 34) of a cabin (28) of an aircraft, comprising
- a central air conditioning device (2) designed to provide a central air flow having, in flight, a pressure lying above the air pressure outside the cabin (28) and an actual temperature (T_{gactual});
- a first supply line (8) designed to supply a part of the central air flow to a first cabin region (28), and
- at least one branch line (10, 12, 14; 58) designed to supply another part of the central air flow to at least one further cabin region (30, 32, 34),
**characterized by** a cooling device (16, 18, 20; 60) which cools the air flow in the at least one branch line (10, 12, 14; 58) if the actual temperature (T_{gactual}) of the air flow in the branch line (10, 12, 14; 58) is higher than the desired temperature (T_{z1desired}, T_{z2desired}, T_{z3desired}) of the air flow to be supplied to the respective further region (30, 32, 34), wherein the cooling device (16, 18, 20; 60) is designed, to effect cooling, to evaporate water into the air flow to be supplied to a region (28, 30, 32, 34) of the cabin (28).

2. Air conditioning system according to Claim 1,
**characterized by** a control device designed to control the cooling device (16, 18, 20; 60), based on a measured actual temperature (T_{gactual}), in such a manner that the air flow in the branch line (10, 12, 14; 58) is cooled to the desired temperature (T_{z1desired}, T_{z2desired}, T_{z3desired}) of the air flow to be supplied to the respective region (30, 32, 34).

3. Air conditioning system according to Claim 1 or 2,
**characterized in that** the cooling device (16, 18, 20; 60) is designed, for the cooling, to evaporate water into the air flow supplied to the region (28, 30, 32, 34) of the cabin (28).

4. Air conditioning system according to one of Claims 1 to 3,
**characterized by** a heating device (22, 24, 26) which heats the air flow in the at least one branch line (10, 12, 14) if the actual temperature of the air flow is lower than a desired temperature (T_{z1desired}, T_{z2desired}, T_{z3desired}) of the air flow to be supplied to the respective further region (30, 32, 34).

5. Air conditioning system according to Claim 4,
**characterized in that** the branch line (58) supplies a part of the central air flow to the cooling device (60), there being connected to the cooling device a plurality of distributing lines (62, 64, 66) which divide the air flow leaving the cooling device (60) and supply a respective divided air flow to a heating device (22, 24, 26), and **in that** there is connected to the heating devices (22, 24, 26) at least one respective supply line (36, 38, 40), which supplies the air flow to respectively one of a plurality of cabin regions (30, 32, 34).

6. Air conditioning system according to Claim 4,
**characterized in that** a plurality of branch lines (10, 12, 14) is provided, which divert a part of the air flow from the central air conditioning device (2) and supply a respective diverted air flow to a combination of heating device (22, 24, 26) and cooling device (16, 18, 20), as well as a plurality of supply lines (36, 38, 40), which lead the respective air flow from a combination of heating device (16, 18, 20) and cooling device (22, 24, 26) to a cabin region (30, 32, 34).

7. Air conditioning system according to one of Claims 1 to 6,
**characterized in that** a control device controls the central air conditioning device (2) in such a manner that the air delivered by it has an actual temperature (T_{gactual}) which corresponds substantially to the desired temperature (T_{zcdesired}, T_{z1desired}, T_{z2desired}, T_{z3desired}) of the cabin region (28, 30, 32, 34) requiring the greatest air volume flow.

8. Air conditioning system according to one of Claims 1 to 7,
**characterized in that** the control device controls the central air conditioning device (2), the at least one cooling device (16, 18, 20; 60) and the at least one heating device (22, 24, 26) in such a manner that the total energy consumption of the air conditioning system is minimal.

9. Air conditioning system according to one of Claims 1 to 8,
**characterized in that**
- the cooling device (16, 18, 20; 60) sprays water into the air flow, nebulizes water into the air flow by ultrasound and/or atomizes water into the air flow by compressed air, or
- the cooling device (16, 18, 20; 60) is designed in such a manner that the air flow to be supplied to the cabin region (28, 30, 32, 34) passes through a bubble column, or
- the cooling device (16, 18, 20; 60) is designed in such a manner that water contained in a porous material evaporates into the air flow and/or water on a body with a large surface, or
- the cooling device (16, 18, 20; 60) is designed in such a manner that water evaporates into the air flow on a membrane.

10. Method for the individual air conditioning of a region (28, 30, 32, 34) of a cabin (28) of an aircraft, including the following steps:
- providing an air flow which, in flight, is pressurized to a pressure which is higher than the air pressure outside the cabin;
- temperature-controlling the pressurized air flow to an actual temperature (T_{gactual});
- supplying the temperature-controlled air flow at the actual temperature (T_{gactual}) to a first cabin region (28); and
- providing the temperature-controlled air flow at the actual temperature (T_{gactual}) to at least one further cabin region (30, 32, 34);
**characterized by**
- cooling the air flow provided to the at least one further cabin region (30, 32, 34) by evaporating water before the air flow is supplied to the respective further cabin region (30, 32, 34) if the desired temperature (T_{z1desired}, T_{z2desired}, T_{z3desired}) of the air flow to be supplied to the respective further cabin region (30, 32, 34) is lower than the actual temperature (T_{gactual}).

11. Method according to Claim 11, **characterized by**
- controlling the cooling of the air flow supplied to the at least one further cabin region (30, 32, 34), based on a measured actual temperature (T_{gactual}), in such a manner that this air flow enters this cabin region (30, 32, 34) at the desired temperature (T_{z1desired}, T_{z2desired}, T_{z3desired}) of the air flow to be supplied to this cabin region (30, 32, 34).

12. Method according to Claim 10 or 11, **characterized by**
- evaporating water into the air flow to be supplied to the region (28, 30, 32, 34) of the cabin (28).

13. Method according to one of Claims 9 to 12, **characterized by**
- removing air from the cabin region (28, 30, 32, 34) to which the air flow is to be supplied, the removed air flow being cooled before it is resupplied to the cabin region (28, 30, 32, 34).

14. Method according to one of Claims 9 to 13, **characterized by**
- heating the air flow provided to the at least one further cabin region (30, 32, 34) before it is supplied to the respective further cabin region (30, 32, 34) if the desired temperature (T_{z1desired}, T_{z2desired}, T_{z3desired}) of the air flow to be supplied to the respective further cabin region (30, 32, 34) is higher than the actual temperature (T_{gactual}).

15. Method according to Claim 14, **characterized by**
- cooling the temperature-controlled air flow at the actual temperature (T_{gactual}), which is supplied to the further cabin regions, to the lowest desired temperature (T_{desiredmin}) of all the desired temperatures (T_{z1desired}, T_{z2desired}, T_{z3desired}) of the further cabin regions (30, 32, 34);
- dividing the air flow at the desired temperature (T_{desiredmin}) into a plurality of air flows which are assigned to a respective further cabin region (30, 32, 34);
- heating the divided air flows to be supplied to the respective further cabin regions (30, 32, 34) to the respective desired temperature (T_{z1desired}, T_{z2desired}, T_{z3desired}) if the desired temperature of the air flow to be supplied to the respective cabin region (30, 32, 34) is higher than the lowest desired temperature (T_{desiredmin}) of all the desired temperatures (T_{z1desired}, T_{z2desired}, T_{z3desired}) of the further zones.

## Revendications

1. Système de climatisation pour un aéronef pour la climatisation individuelle de zones (28, 30, 32, 34) d'une cabine (28) d'un aéronef, comprenant
- un dispositif central de climatisation (2) qui est conçu pour fournir un flux d'air central, lequel flux présente pendant le vol une pression supérieure à la pression de l'air à l'extérieur de la cabine (28) et une température réelle (T_{gist}) ;
- une première conduite d'amenée (8) qui est conçue pour amener une partie du flux d'air central à une première zone de cabine (28), et
- au moins une conduite de dérivation (10, 12, 14 ; 58) qui est conçue pour amener une autre partie du flux d'air central au moins à une autre zone de cabine (30, 32, 34),
**caractérisé par** un dispositif de refroidissement (16, 18, 20 ; 60) qui refroidit le flux d'air dans ladite au moins une conduite de dérivation (10, 12. 14 ; 58) au cas où la température réelle (T_{gist}) du flux d'air dans la conduite de dérivation (10, 12, 14 ; 58) serait supérieure à la température théorique (T_{z1soll}), T_{z2soll}, T_{z3soll}) du flux d'air à amener à l'autre zone (30, 32, 34) respective, ce dispositif de refroidissement (16, 18, 20 ; 60) étant conçu pour faire s'évaporer de l'eau dans le flux d'air à amener à une zone (28, 30, 32, 34) de la cabine (28) afin de le refroidir.

2. Système de climatisation selon la revendication 1,
**caractérisé par** un dispositif de commande qui est conçu de manière à commander le dispositif de refroidissement (16, 18, 20 ; 60) sur la base d'une température réelle mesurée (T_{gist}) de sorte que le flux d'air dans la conduite de dérivation (10, 12, 14 ; 58) est refroidi et ramené à la température théorique (T_{z1soll}, T_{z2soll}, T_{z3soll}) du flux d'air à amener à l'autre zone respective (30, 32, 34).

3. Système de climatisation selon la revendication 1 ou 2,
**caractérisé en ce que** le dispositif de refroidissement (16, 18, 20 ; 60) est conçu pour faire s'évaporer de l'eau dans le flux d'air amené à la zone (28, 30, 32, 34) de la cabine (28) afin de le refroidir.

4. Système de climatisation selon l'une des revendications 1 à 3,
**caractérisé par** un dispositif de chauffage (22, 24, 26) qui chauffe le flux d'air dans ladite au moins une conduite de dérivation (10, 12, 14) au cas où la température réelle du flux d'air serait inférieure à une température théorique (T_{z1soll}, T_{z2soll}, T_{z3soll}) du flux d'air à amener à l'autre zone (30, 32, 34) respective.

5. Système de climatisation selon la revendication 4,
**caractérisé en ce que** la conduite de dérivation (58) amène une partie du flux d'air central au dispositif de refroidissement (60), une pluralité de conduites de distribution (62, 64, 66) étant raccordée au dispositif de refroidissement, lesquelles conduites divisent le flux d'air sortant du dispositif de refroidissement (60) et amènent chacune un courant d'air divisé à un dispositif de chauffage (22, 24, 26), et **en ce qu'**au moins une conduite d'amenée (36, 38, 40) qui est raccordée à chacun des dispositif de chauffage (22, 24, 26) et qui amène le flux d'air à une des multiples zones de cabine (30, 32, 34).

6. Système de climatisation selon la revendication 4,
**caractérisé en ce qu'**une pluralité de conduites de dérivation (10, 12, 14) qui dévient une partie du flux d'air du dispositif de climatisation central (2) et amènent chaque flux d'air dérivé à un ensemble combinant un dispositif de chauffage (22, 24, 26) et un dispositif de refroidissement (16, 18, 20), et **en ce qu'**il existe une pluralité de conduites d'amenée (36, 38, 40) qui dirigent chaque flux d'air provenant d'un ensemble combinant un dispositif de chauffage (22, 24, 26) et un dispositif de refroidissement (16, 18, 20) vers une zone de cabine (30, 32, 34).

7. Système de climatisation selon l'une des revendications 1 à 6,
**caractérisé en ce qu'**un dispositif de commande pilote le dispositif de climatisation central (2) de sorte que l'air fourni par ce dernier présente une température réelle (T_{gist}) qui correspond pour l'essentiel à la température théorique (T_{z1soll}, T_{z2soll}, T_{z3soll}) de la zone de cabine (28, 30, 32, 34) qui nécessite le plus grand débit volumique d'air.

8. Système de climatisation selon l'une des revendications 1 à 7,
**caractérisé en ce que** le dispositif de commande pilote le dispositif de climatisation central (2), ledit au moins un dispositif de refroidissement (16, 18, 20 ; 60) et ledit au moins un dispositif de chauffage (22, 24, 26) de sorte que la consommation totale d'énergie du système de climatisation est infime.

9. Système de climatisation selon l'une des revendications 1 à 8,
**caractérisé en ce que**
- le dispositif de refroidissement (16, 18, 20 ; 60) envoie de l'eau pulvérisée dans le flux d'air, que de l'eau est nébulisée par ultrasons et/ou que de l'eau est pulvérisée par air comprimé dans le flux d'air, ou
- le dispositif de refroidissement (16, 18, 20 ; 60) est conçu de manière à ce que le flux d'air à amener à la zone de cabine (28, 30, 32, 24) traverse une colonne à bulles, ou
- le dispositif de refroidissement (16, 18, 20 ; 60) est conçu de manière à ce que de l'eau contenue dans une matière poreuse s'évapore dans le flux d'air et/ou de l'eau s'évapore sur un corps de grande surface, ou
- le dispositif de refroidissement (16, 18, 20 ; 60) est conçu de manière à ce que de l'eau s'évapore sur une membrane dans le flux d'air.

10. Procédé pour la climatisation d'une zone (28, 30, 31, 34) d'une cabine (28) d'un aéronef, comportant les étapes suivantes :
- la fourniture d'un flux d'air qui est mis pendant le vol sous pression, laquelle est supérieure à la pression de l'air à l'extérieur de la cabine ;
- la régulation de la température du flux d'air mis sous pression pour l'amener à une température réelle (T_{gist}) ;
- l'amenée du flux d'air porté à la température réelle (T_{gist}) à une première une première zone de cabine (28) ; et
- la fourniture du flux d'air porté à la température réelle (T_{gist}) à au moins une autre zone de cabine (30, 32, 34) ;
**caractérisé par**
- le refroidissement par évaporation d'eau du flux d'air fourni à ladite au moins une autre zone de cabine (30, 32, 34) avant son amenée à l'autre zone de cabine (30, 32, 34) respective au cas où la température théorique (T_{z1soll}, T_{z2soll}, T_{z3soll}) du flux d'air à amener à l'autre zone (30, 32, 34) respective serait inférieure à la température réelle (T_{gist}).

11. Procédé selon la revendication 11, **caractérisé par**
- la commande du refroidissement du flux d'air amené à ladite au moins une autre zone de cabine (30, 32, 34) sur la base d'une température réelle mesurée (T_{gist}) de sorte que ce flux d'air ramené à la température théorique (T_{z1soll}, T_{z2soll}, T_{z3soll}) du flux d'air à amener à cette zone de cabine (30, 32, 34) pénètre dans cette zone de cabine (30, 32, 34).

12. Procédé selon la revendication 10 ou 11, **caractérisé par**
- l'évaporation d'eau dans le flux d'air à amener à la zone (28, 30, 32, 34) de la cabine (28).

13. Procédé selon l'une des revendications 9 à 12, **caractérisé par**
- le prélèvement d'air dans la zone de cabine (28, 30, 32, 34) appelée à recevoir le flux d'air, le flux d'air prélevé étant refroidi avant d'être à nouveau ramené à la zone de cabine (28, 30, 32, 34).

14. Procédé selon l'une des revendications 9 à 13, **caractérisé par**
- le chauffage du flux d'air fourni à ladite au moins une autre zone de cabine (30, 32, 34) avant son amenée à l'autre zone de cabine (30, 32, 34) respective au cas où la température théorique (T_{z1soll}, T_{z2soll}, T_{z3soll}) du flux d'air à amener à l'autre zone (30, 32, 34) respective serait supérieure à la température réelle (T_{gist}).

15. Procédé selon la revendication 14, **caractérisé par**
- le refroidissement du flux d'air tempéré à la température réelle (T_{gist}) et amené aux autres zones de cabine pour le régler à la température théorique (Tₛₒₗᵢₘᵢₙ) la plus basse de toutes les températures théoriques (T_{z1soll}, T_{z2soll}, T_{z3soll}) des autres zones de cabine (30, 32, 34) ;
- la division du flux d'air de température théorique (Tₛₒₗₗₘᵢₙ) en une pluralité de flux d'air qui sont associés chacun à une autre zone cabine (30, 32, 34) ;
- le chauffage des flux d'air divisés et à amener aux autres zones de cabine (30, 32, 34) respectives pour les porter à la température théorique (T_{z1soll}, T_{z2soll}, T_{z3soll}) respective au cas où la température théorique (T_{z1soll}, T_{z2soll}, T_{z3soll}) du flux d'air à amener à l'autre zone (30, 32, 34) respective serait supérieure à la température théorique (Tₛₒₗₗₘᵢₙ) la plus basse de toutes les températures théoriques (T_{z1soll}, T_{z2soll}, T_{z3soll}) des autres zones.
